# EUROPEAN PATENT APPLICATION

(11) **EP 3 098 277 A1**
(43) Date of publication of application: **30.11.2016**
(21) Application number: 15169424.7
(22) Date of filing: 27.05.2015
(51) Int. Cl.: C09J 7/02, B32B 7/12, H01L 21/00

(54) **PRE-CUT FILM AND A PRODUCTION METHOD THEREOF**

(71) Applicant: Henkel AG & Co. KGaA, 40589 Düsseldorf (DE)
(72) Inventor: Changsuk, Oh, 22BL, Suwon City (KR)

(57) **Abstract**

Pre-cut film (111) with a first edge (101) and second edge (102) on the opposite side with regard to the first edge (101) both extending in a longitudinal direction, comprising a carrier liner (104) extending in a lateral direction form the first edge (101) to the second edge (102) and a pre-cut (106) placed onto the carrier liner (104), wherein the pre-cut (106) comprises an adhesive film (105) and a cover liner (103), a first adhesive surface (115) facing the cover liner (103) and a second adhesive surface (116) facing the carrier liner (104), characterized in that at least one guide spacer (109, 110, 112) is placed on the carrier liner (104), wherein said guide spacer (109, 110, 112) comprises an adhesive film (105) and a cover liner (103), a first adhesive surface (115) facing the cover liner (103) and a second adhesive surface (116) facing the carrier liner (104) and wherein a gap (108) is intended between the pre-cut (106) and the inner side (117, 119, 121) of the guide spacer (109, 110, 112) and wherein the outer side (118, 120, 122) on the opposite side with regard to the inner side (117, 119, 121) of guide spacer (109, 110, 112) builds at least partly the first edge (101) or the second edge (102).

## Description

The present invention relates to a pre-cut film and a production method thereof.

In the field of especially mobile-relate devices the use of laminated semiconductor elements are becoming state of the art technology especially for further addition of functionalities and downsizing the device. Especially the further development of stacked multichip packaging takes a central role, combining downsizing of the package and multi-layer lamination.

For providing said multi-layer lamination especially paste materials have been used as an adhesive. However, it is also state of the art to use an adhesive in the state of a film instead of a paste material.

US20080261039A1 discloses an adhesive sheet provided as a pre-cut film comprising a release substrate, a substrate film, and a first tacky-adhesive layer placed between the release substrate and the substrate film for the use in this technical field. However, it could be challenging to use this sheet especially in fine pitch applications.

An object of the invention is to provide an improved pre-cut film. Further objects are providing a production method of said pre-cut film.

The object regarding the pre-cut film is solved with the features of claim 1.

The object regarding the production method of said adhesive sheet is solved with the features of claim 9.

Advantageous embodiments are describe with the respective dependent claims.

The invention overcomes the identified disadvantages and solves the mentioned object by providing a pre-cut film with a first edge and second edge on the opposite side with regard to the first edge both extending in a longitudinal direction, comprising a carrier liner extending in a lateral direction form the first edge to the second edge and a pre-cut placed onto the carrier liner, wherein the pre-cut comprises an adhesive film and a cover liner, a first adhesive surface facing the cover liner and a second adhesive surface facing the carrier liner, wherein at least one guide spacer is placed on the carrier liner, wherein said guide spacer comprises an adhesive film and a cover liner, a first adhesive surface facing the cover liner and a second adhesive surface facing the carrier liner and wherein a gap is intended between the pre-cut and the inner side of the guide spacer and wherein the outer side on the opposite side with regard to the inner side of guide spacer builds at least partly the first edge or the second edge.

The film has a longitudinal and a lateral extension. The longitudinal extension of the film is preferably many times larger than the lateral extension. Preferably, the film is band-shaped and preferably wound or coiled to a roll of a film.

Various carrier liners could be used. Preferably, a liner made of polyethylene is used as carrier liner. It could be advantageous that said polyethylene liner is equipped with a silicone resin. It is furthermore advantageous that the carrier liner has little tackiness, especially compared to the tackiness of the adhesive film, or even no tackiness especially on the side facing the adhesive film. The carrier liner has a thickness in the range of preferably 15 µm to 75 µm, more preferably in the range of 25 µm to 65 µm, even more preferably in the range of 35 µm to 55 µm.

The cover liner is preferably based on a polyolefin; a polyethylene terephthalate or a polyvinyl chloride. The cover liner has preferably an equilibrium melting temperature higher than 70°C, preferably higher than 90°C, most preferred higher than 110 °C. Preferably, the cover liner has tackiness, especially on the side facing the adhesive film. To provide tackiness, the cover liner preferably comprises an adhesive surface on the side facing the adhesive film, wherein the adhesive surface of the cover liner could be a layer of a pressure sensitive adhesive, which shows good pressure sensitive adhesion properties at 25 °C and/or a layer of adhesive, which is curable by irradiation. The process conditions for the irradiation, including UV intensity, time, wavelength, and pulse frequency, can be tuned, without undue experimentation by one skilled in the art according to the chosen adhesive. The cover liner comprising said base as well as said adhesive surface has a thickness in the range of preferably 85 µm to 140 µm, more preferably in the range of 90 µm to 135 µm. A possible combination would be a base made of a polyolefin with a thickness in the range of 80 µm to 110 µm and an adhesive surface made of a pressure sensitive adhesive with thickness in the range of 5 µm to 30 µm.

The prove tackiness of the cover liner is especially in the range of 0.8 N/20mm² to 2.0 N/20mm² at 25 °C, more preferably in the range of 1.0 N/20mm² to 1.8 N/20mm² at 25 °C, even more preferably in the range of 1.2 N/20mm² to 1.6 N/20mm² at 25 °C. The tackiness is measured by a measuring method according to Standard No. 180° Peeling Test for Adhesive Tapes [Standard No. ISO 29862:2007 (JIS Z 0237:2009)].

The adhesive film is preferably based on an acrylate or epoxy base resin, which is especially known from and especially used for electronic appliances especially used in the technical field of semiconductors or in the technical field of die attach or wafers. The adhesive film is preferably thermally curable The process conditions for curing the adhesive film, including temperature and time can be tuned, without undue experimentation by one skilled in the art according to the chosen adhesive. In addition or as an alternative it is possible to use a film, which is curable by irradiation like e.g. by UV irridation. The process conditions for the irradiation, including irritation intensity, time, wavelength, and pulse frequency, can be tuned, without undue experimentation by one skilled in the art according to the chosen adhesive. It is especially possible to use an adhesive based on an epoxy base resins purchasable under the brand LOCTITE ™ ABLESTIK ™ ATB 100 Series. Especially LOCTITE ™ ABLESTIK ™ ATB F125E, which is an adhesive film formulated for use in wafer lamination processes or as a preform deca. Also other resins purchasable under the brand LOCTITE ™ ABLESTIK ™ ATB 100 Series are possible, like e.g. LOCTITE ™ ABLESTIK ™ ATB 110, which is a single layer format die attach film; LOCTITE ™ ABLESTIK ™ ATB 120 is a single layer format die attach film or LOCTITE ™ ABLESTIK ™ ATB 130, which is a single layer format die attach film or other suitable products from other manufacturers. It is especially possible to use the dicing die bonding film as adhesive film, which is described in EP1894980A1 in detail, which is hereby incorporated by reference. It is also possible to use a multilayer UV-curable adhesive film as adhesive film, which is described in WO2009123608A1 in detail, which is hereby incorporated by reference. As an alternative it is possible to use an adhesive composition for use in die attach applications as adhesive film as, which is described in WO2009117345A2 in detail, which is hereby incorporated by reference. Preferably, an adhesive film is used, which has in the cured state a measured ion impurity of lower than 20ppm. The adhesive film has a thickness in the range of preferably 20 µm to 40 µm, more preferably in the range of 25 µm to 35 µm.

The pre-cut can be of any shape, which is suitable for the specific application. The pre-cut can especially be used in the technical field of electronics, especially for semiconductors or in consumer electronics. The pre-cut is preferably used for fine pitch application.

The guide spacer provides for example a possibility to secure the pre-cut from outside influences on the side of the pre-cut facing the guide spacer. It is also possible to stack a plurality of pre-cut films onto each other. With such a configuration said guide spacer is used as a distance keeper between the pre-cut films so that for example a possibility is provided that each carrier liner of an upper pre-cut film has a contact surface, which is provided by the cover liner of both the pre-cut and of the at least one guide spacer of the respective lower pre-cut film especially to prevent a settling of the upper pre-cut film, which could especially lead to a deformation of the lower pre-cut. This configuration is especially advantageous if the pre-cut film is wound or coiled to a roll of or if a plurality of segments of the pre-cut film are stacked.

In a preferred embodiment a plurality of pre-cuts are provided on the carrier liner neighbored to each other in the longitudinal direction, preferably spaced to each other with spacing. With such a configuration it is for example possible to provide a stock of pre-cuts on a common carrier liner. This pre-cut film comprising a plurality of pre-cuts could for example be wound or coiled to a roll of or a plurality of segments of the pre-cut film comprising a plurality of pre-cuts are stacked.

In case a plurality of pre-cuts are used it is furthermore advantageous that the guide spacer is provided as a continuous band extending in said longitudinal direction neighbored to said pre-cuts and spaced to said pre-cuts with said gap. With such a configuration it is for example possible provide an excellent protection of the pre-cut as described above. This configuration is especially advantageous if the pre-cut film is wound or coiled to a roll of or if a plurality of segments of the pre-cut film are stacked.

A further advantage is to use two guide spacers, one of the guide spacers on each side of the pre-cut film, this means one guide spacer on the side of the first edge and the second guide spacer on the opposite side, this means the side of the second edge, wherein a gap is intended between the pre-cut and the inner side of each guide spacer and wherein the outer side of the first guide spacer builds at least partly the first edge and the outer side of the second guide spacer builds at least partly the second edge. With such a configuration said pre-cut or said plurality of pre-cuts can be bordered by said guide spacers to provide further protection of the pre-cut as described above. This configuration is especially advantageous in case the pre-cut film is stacked or wound or coiled to a roll of a film so that the guide spacers acts as distance keepers. It is of course preferred to use this configuration in combination with a pre-cut film comprising a plurality of pre-cuts neighbored to each other in the longitudinal direction, preferably spaced to each other with spacing as described above.

A further advantage is to build the film in a way that the first edge and/or the second edge provides a flat surface area provided by the side face of the carrier liner and the outer side of the guide spacer. This could be especially advantageous if the pre-cut film is wound or coiled to a roll of or if a plurality of segments of the pre-cut film are stacked. In this case preferably each outer surface of this stack or roll provided by the edges of the pre-cut film would be flat for example to improve the handling or storing capabilities of the pre-cut film.

As an alternative it could advantageous to build the film in a way that the first edge and/or the second edge provides a staged surface area provided by the side face of the carrier liner and the outer side of the guide spacer. This could be especially an advantage in case special distance capabilities have to be provided by the guide spacer, so that the at least one guide spacer is not flush with the edge of especially the carrier liner.

A further advantage is to use a cover liner has a prove tackiness in the range of 0.8 N/20mm² to 2.0 N/20mm² at 25 °C, more preferably in the range of 1.0 N/20mm² to 1.8 N/20mm² at 25 °C, even more preferably in the range of 1.2 N/20mm² to 1.6 N/20mm² at 25 °C. The tackiness is measured by a measuring method according to Standard No. 180° Peeling Test for Adhesive Tapes [Standard No. ISO 29862:2007 (JIS Z 0237:2009)].

A further advantage is to choose the components of the film in a way that the adhesion between the cover liner and the adhesive film is higher than the adhesion between the carrier liner and the adhesive film. Preferably, the adhesion between the cover liner and the adhesive film is higher than the adhesion between the carrier liner and the adhesive film in the range of six to eight times. This adhesion to back when peeled at 180° in the normal state is measured by a measuring method according to Standard No. 180° Peeling Test for Adhesive Tapes [Standard No. ISO 29862:2007 (JIS Z 0237:2009)].

The invention overcomes furthermore the identified disadvantages and solves the mentioned object by providing a method for producing a pre-cut film as described above, comprising the step of providing a film with a first edge and second edge both extending in a longitudinal direction, comprising a carrier liner, with a cover liner and an adhesive film between the carrier liner and the cover liner wherein the adhesive film comprises a first adhesive surface facing the cover liner and a second adhesive surface facing the carrier liner. Subsequently comprising the step of cutting the film in a way that the cover liner and the adhesive film is cut through, but that the carrier liner is at least partly uncut, wherein the cut line is designed in a way that an outline of the pre-cut and at least one outline of a cutoff-part is cut into the film and wherein a remaining part of the film is left, which is distanced from the outline of the pre-cut by the cutoff-part, to provide at least one of said guide spacers. Furthermore, the method comprises the step of removing the cover liner and the adhesive film of the cutoff part to provide said gap. With such a method, a pre-cut film as described above in detail can be produced very simple.

A further advantage is that the film is provided continuously and that the cutting step is carried out continuously to provide a plurality of pre-cuts neighbored to each other in the longitudinal direction, preferably spaced to each other with spacing as described above, wherein the pre-cut film is winded onto a roll after removing the cover liner and the adhesive film of the cutoff part.

A further advantage is that the film is cutted in a way that the carrier liner is cut with a cutting depth in the range of 5% to 50% of the thickness of the carrier liner, more preferably in the range of 10% to 40% of the thickness of the carrier liner, even more preferably in the range of 15% to 25% of the thickness of the carrier liner.

The invention overcomes furthermore the identified disadvantages and solves the mentioned object by providing a roll of pre-cut film as described above especially manufactured via the aforementioned method, wherein in a plurality of pre-cuts is provided neighbored to each other in the longitudinal direction, preferably spaced to each other with spacing and that at least one face side of the roll is at least partly build by a guide spacer.

Preferred embodiments of the invention are described with the figures.
Figure 1 shows a top view of a part of a film used as a base product,
Figure 2 shows a sectional view of the film shown with figure 1,
Figure 3 shows a top view of a part of a pre-cut film according to the invention,
Figure 4 shows a sectional view of the pre-cut film shown with figure 3,
Figure 5 shows a perspective view of a roll of the pre-cut film shown with figure 3,
Figure 6 shows a sectional view of the roll shown with figure 5,
Figure 7 shows a top view of a part of an alternative of a pre-cut film according to the invention,
Figure 8 shows a sectional view of the pre-cut film shown with figure 7,
Figure 9 shows a top view of a part of a further alternative of a pre-cut film according to the invention,
Figure 10 shows a sectional view of the pre-cut film shown with figure 9,
Figure 11 shows a schematic representation of a device used in a manufacturing process of a pre-cut film according to the invention,
Figure 12 shows a schematic representation of an alternative device used in a manufacturing process of a pre-cut film according to the invention.

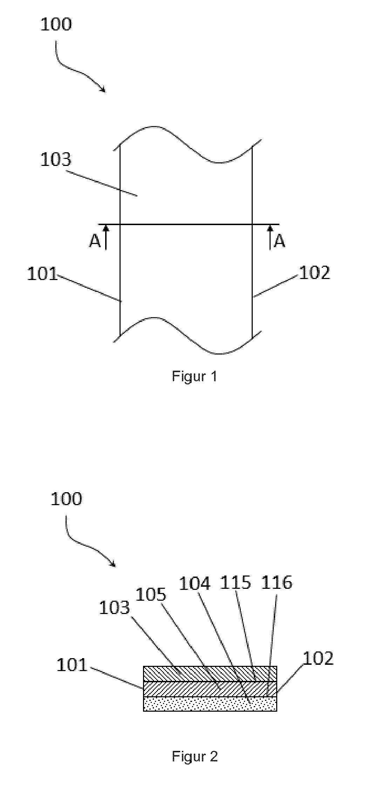

Figure 1 shows a top view of a part of a film 100 used as a base product. The film 100 has a first edge 101 and second edge 102 on the opposite side with regard to the first edge 101 both extending in a longitudinal direction. Figure 1 shows only a partial view of the film 100, this means that the film 100 extends further in both directions longitudinally. Figure 1 is a top view onto the film 100 therefore only the cover liner 103 can be seen, hiding the other components of the film. This components are visible in Figure 2 showing a sectional view of the film 100 shown with figure 1. The film 100 comprises a carrier liner 104 on the bottom, said cover liner 103 on the top and an adhesive film 105 between the carrier liner 104 and the cover liner 103, wherein the adhesive film 105 comprises a first adhesive surface 115 facing the cover liner 103 and a second adhesive surface 116 facing the carrier liner 104. It should be understood that also cover liner 103 comprises and adhesive surface facing the adhesive film 105, which is not marked. Carrier liner 104, cover liner 103 and adhesive film 105 extend in a lateral direction form the first edge 101 to the second edge 102. This film 100 is the base product to produce a pre-cut film 111 according to the invention, especially via the method described below.

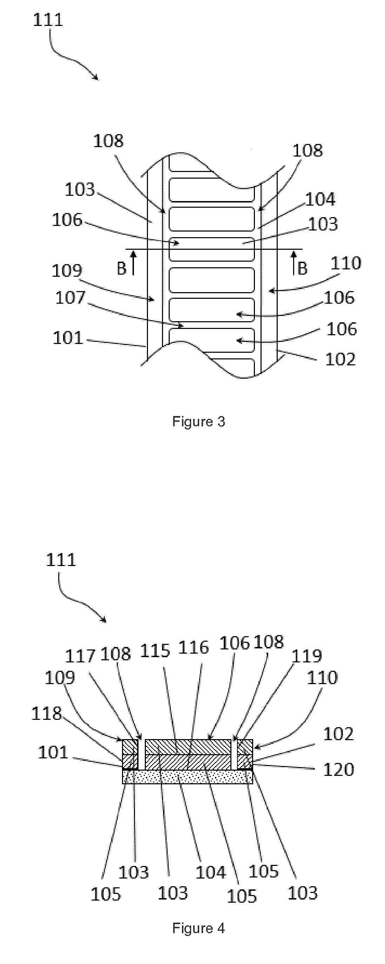

Figure 3 shows a top view of a part of said pre-cut film 111 according to the invention. The film 100 shown with figures 1 and 2 was cut in a way that the cover liner 103 and the adhesive film 105 is cut through, but that the carrier liner 104 is partly uncut. The carrier liner 104 is cut with a cutting depth of 20% of the thickness of the carrier liner 104, to simplify the removal of the cut-off part. After that, said cutoff-part of the cut cover liner 103 and the cut adhesive film 105 was removed so that a plurality of the pre-cuts 106 are formed in the center of the pre-cut film 111 neighbored to each other in the longitudinal direction and spaced to each other with spacing 107. Furthermore, two guide spacers 109, 110 are formed at the peripheral zones on each side of the pre-cut film 111 each in the shape of a continuous band extending in said longitudinal direction neighbored to said pre-cuts 106, wherein each of the guide spacer 109, 110 is spaced to said pre-cuts 106 via a respective gap 108. In the shown top view of figure 3 carrier liner 104 can be seen in the area of gaps 118 and spacing 107, because of the removed cut-off parts. Said two guide spacers 109, 110 extend in parallel in said longitudinal direction and have a regular width. The guide spacers 109, 110 are located in said peripheral zones on each side of the pre-cut film 111, this means that the first guide spacer 109 is located on the side of the first edge 101 and the second guide spacer 110 on the opposite side, this means the side of the second edge 102. The guide spacers 109, 110 are located in such a way that the outer side 118 of the first guide spacer 109 builds partly the first edge 101 and the outer side 120 of the second guide spacer 110 builds partly the second edge 102 of the pre-cut film 111.

Figure 4 shows a sectional view of the pre-cut film 111 shown with figure 3. It can be seen that the pre-cut film 111 comprises a continuous carrier liner 104 extending from the first edge 101 to the second edge 102 and building partly said edges 101, 102 of the pre-cut film 111. At the peripheral zones on each side of the pre-cut film 111 said guide spacers 109, 110 are located, comprising the adhesive film 105 as well as the cover liner 103. The outer side 118 of the first guide spacer 109 builds together with the carrier liner 104 the first edge 101 and the outer side 120 of the second guide spacer 110 builds together with the carrier liner 104 the second edge 102 of the pre-cut film 111. Both first edge 101 and the second edge 102 have a flat surface area provided by the side face of the carrier liner 104 and the outer side 118, 120 of the respective guide spacer 109, 110. Furthermore, the inner side 117 of the first guide spacer 109 is distanced to the pre-cut 106 via a gap 108 provided by the removed cutoff-part as described above, and the inner side 119 of the second guide spacer 110 is distanced to the opposite side of the pre-cut 106 via a further gap 108. The guide spacer 112 and also the pre-cut 106 comprise said adhesive film 106 with said first adhesive surface 115 facing the cover liner 103 and said second adhesive surface 116 facing the carrier liner 104.

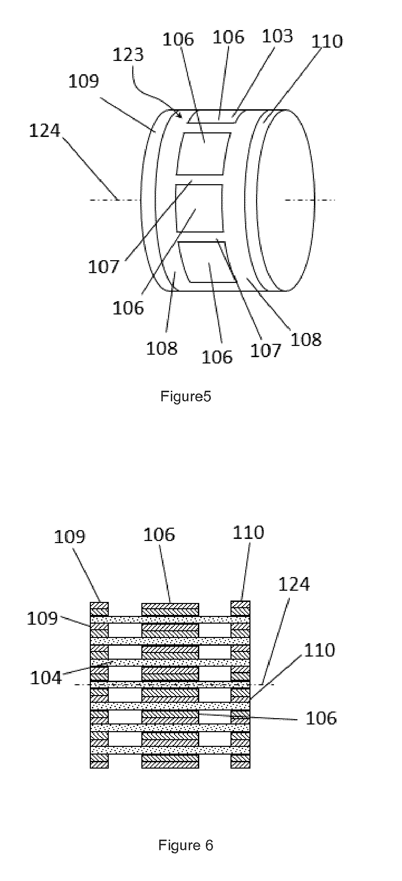

Figure 5 shows a perspective view of a roll 123 of the pre-cut film 111 shown with figure 3 comprising an axis 124. Said pre-cut film 111 was rolled or coiled to said roll 123 after removing said cutoff-part. The pre-cut film 111 comprises a plurality of pre-cuts 106 in the center of the pre-cut film 111 neighbored to each other in the longitudinal direction and spaced to each other with respective spacing 107. Said guide spacers 109, 110 are distanced to the pre-cuts 106 via said gaps 108 and are located in said peripheral zones on each side of the pre-cut film 111, providing together with the side faces of the carrier liner 104 said first edge 101 and second edge 102 respectively, as described above and therefore building together with the side faces of the carrier liner 104 the two face sides of the roll 123.

Figure 6 shows a sectional view of the roll 123 shown with figure 5. It can be seen that the pre-cuts 106 are arranged in the center of the film 111. Said guide spacers 109, 110 are distanced to the pre-cuts 106 via said gaps 108 and are located in said peripheral zones and used as a distance keeper between the layers of pre-cut film 111. Thus, a possibility is provided that the each carrier liner 104 of an upper pre-cut film 111 has a contact surface, which is provided by the cover liner 103 of both the pre-cut 106 and of the at least one guide spacer 109, 110 of the respective lower pre-cut film 111 especially to prevent a settling of the upper pre-cut film 111, which could especially lead to a deformation of the lower pre-cut 106 of the lower pre-cut film 111.

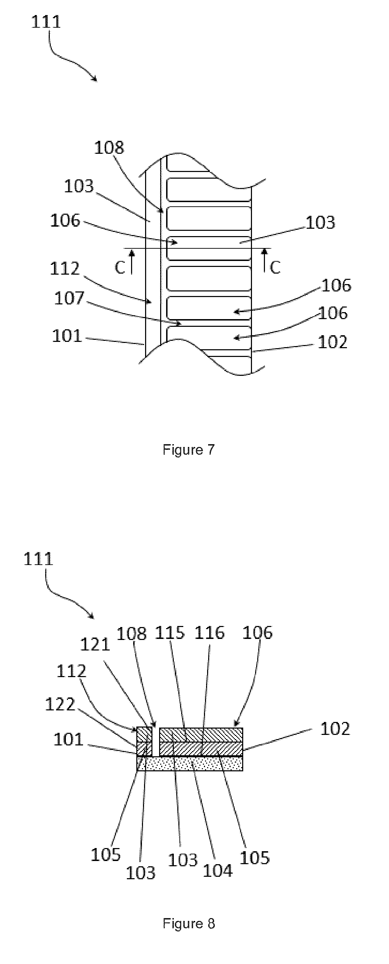

Figure 7 shows a top view of a part of an alternative of a pre-cut film 111 according to the invention. The general configuration is similar to the embodiment shown with figure 3 and the shown pre-cut film 111 was also provided by cutting the film 100 shown with figure 1, so that the cover liner 103 and the adhesive film 105 is cut through and a cutoff-part was removed. A plurality of the pre-cuts 106 are formed neighbored to each other in the longitudinal direction and spaced to each other with a respective spacing 107. One difference is that the pre-cuts 106 are not located in the center of the pre-cut film 111, but rather partly at one peripheral zone so that an outer side of each pre-cut 106 builds partly the second edge 102 of the pre-cut film 111. On the opposing side a guide spacer 112 is formed at the opposing peripheral zone of the pre-cut film 111 in the shape of a continuous band extending in said longitudinal direction neighbored to said pre-cuts 106 and spaced to said pre-cuts 106 via a gap 108 between inner side 121 of the guide spacer 112 and the pre-cuts 106. Said location of the guide spacer 112 in said peripheral zone is selected in such a way, that the outer side 122 of the guide spacer 112 builds partly the first edge 101 of the pre-cut film 111.

Figure 8 shows a sectional view of the pre-cut film 111 shown with figure 7. It can be seen, that the pre-cut film 111 comprises a continuous carrier liner 104 extending from the first edge 101 to the second edge 102 and building partly said edges 101, 102 of the pre-cut film 111. At the left peripheral zone said guide spacer 112 is located, comprising the adhesive film 105 as well as the cover liner 103. The outer side 122 of the guide spacer 112 builds together with the carrier liner 104 the first edge 101. On the opposite side the pre-cut 106 is located at the peripheral zone so that an outer side of the pre-cut 106 builds together with the carrier liner 104 the second edge 102 of the pre-cut film 111. Both the first edge 101 and the second edge 102 have a flat surface area provided by the side face of the carrier liner 104 and the outer side of the pre-cut 106 and the outer side 122 of the guide spacer 112 respectively. Furthermore, the inner side 121 of the guide spacer 112 is distanced to the pre-cut 106 via the gap 108 provided by the removed cutoff-part as described above. The guide spacer 112 and the pre-cut 106 comprises said adhesive film 106 with said first adhesive surface 115 facing the cover liner 103 and said second adhesive surface 116 facing the carrier liner 104.

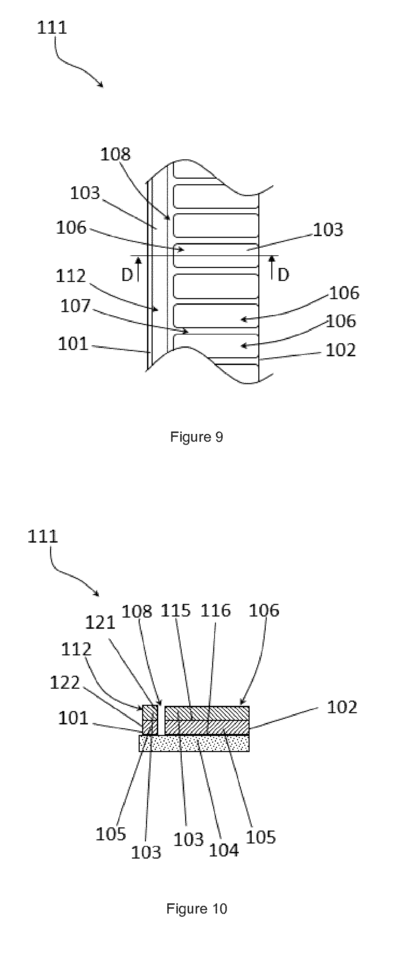

Figure 9 shows a top view of a part of a further alternative of a pre-cut film 111 according to the invention. The general configuration of the pre-cut film 111 is similar to the pre-cut film 111 shown with figures 8 and 9. The difference is that the guide spacer 112 is located at a peripheral zone of the pre-cut film 111 but not at the outermost region of the pre-cut film 111. This means that the carrier liner 104 extends further in said lateral direction in the outermost region compared to said guide spacer 112. Indeed, the outer side 122 of the guide spacer 112 builds together with the carrier liner 104 the first edge 101, but because of the special configuration, this first edge 101 has a staged surface area provided by the side face of the carrier liner 104 and the outer side 122 of the guide spacer 112. This can also be seen in detail in Figure 10 showing a sectional view of the pre-cut film 111 shown with figure 9.

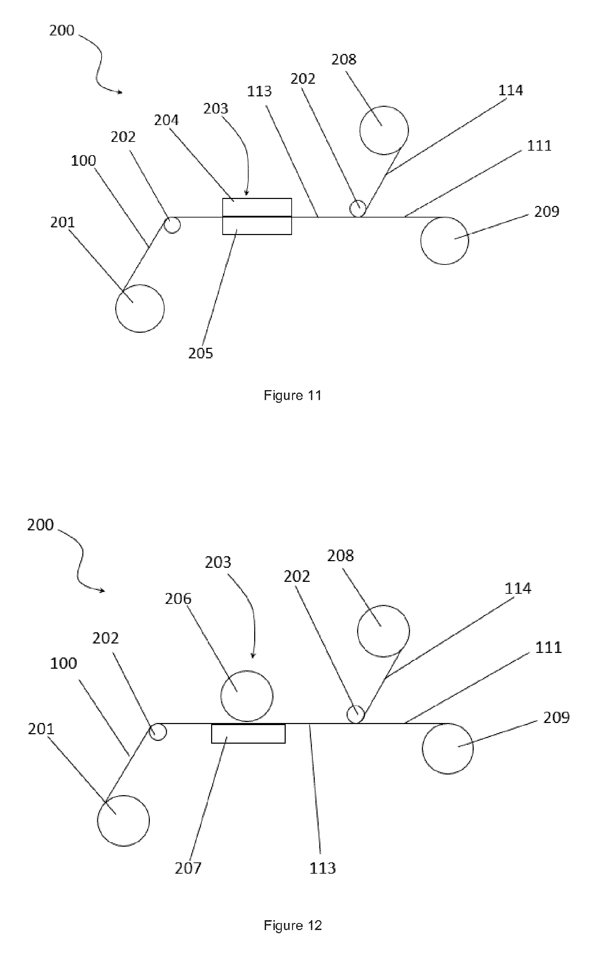

Figure 11 shows a schematic representation of a device 200 used in a manufacturing process of a pre-cut film 111 according to the invention. The device 200 comprises a take-off reel 201 comprising an amount of film 100 as shown with figures 1 and 2 and as described above in detail. The description and all the details are incorporated by reference herein. Said film 100 is unrolled or decoiled continuously and fed via a guide roller 202 to cutting means 203. In this specific case, the cutting means 203 comprises a flatbed press 204 with a lower bottom mount 205, wherein the film 100 is inserted and passed between flatbed press 204 and lower bottom mount 205. Said cutting means 203 are in operation continuously and are getting into contact with the passing film 100. Furthermore, said cutting means 203 are designed to cut the film 100 in such a way that the cover liner 103 and the adhesive film 105 is cut through, but that the carrier liner 104 is at least partly uncut. The carrier liner 104 is cut with a cutting depth of 20% of the thickness of the carrier liner 104, to simplify the removal of the cut-off part. The cut line is designed in a way that an outline of a pre-cut 106 and at least one outline of a cutoff-part is cut into the film 100 and wherein a remaining part of the film 100 is left, which is distanced from the outline of the pre-cut 106 by the cutoff-part, to provide at least one of said guide spacers 109, 110, 112 to provide the shape of the pre-cut film 111 as shown with any of figures 3 to 10 and as described above in detail. The description and all the details are incorporated by reference herein The cut film 100 leaves the cutting means 203 as a middling film 113 because a cut-off part is still left, which has to be removed. For this said middling film 113 is fed further and the cut-off part is removed at a guide roller 202 as a film scrap 114, which is coiled onto a take-up reel 208 and said pre-cut film 111 is fed to be coiled at a take up reel 209 to get a roll of pre-cut film 111, especially as shown with figure 5 and as described above.

Figure 12 shows a schematic representation of a device 200 used in a manufacturing process of a pre-cut film 11 according to the invention. The device 200 is similar to the device 200 shown with figure 11 and comprises also a take-off reel 201 comprising an amount of film 100 as shown with figures 1 and 2 and as described above in detail. The description and all the details are incorporated by reference herein Said film 100 is unrolled or decoiled continuously and fed via a guide roller 202 to cutting means 203. In this specific case, the cutting means 203 comprises a rotary press 206 with a lower bottom mount 207, wherein the film 100 is inserted and passed between rotary press 206 and lower bottom mount 207. Said cutting means 203 are in operation continuously and are getting into contact with the film when the films is passed through. Furthermore, said cutting means 203 are designed to cut the film 100 in such a way that the cover liner 103 and the adhesive film 105 is cut through, but that the carrier liner 104 is at least partly uncut. The carrier liner 104 is cut with a cutting depth of 25% of the thickness of the carrier liner 104, to simplify the removal of the cut-off part. The cut line is designed as described above and the cut film 100 leaves the cutting means 203 as a middling film 113 because a cut-off part is still left, which has to be removed. For the said middling film 113 is fed further and the cut-off part is removed at a guide roller 202 as a film scrap 114, which is coiled onto a take-up reel 208 and said pre-cut film is fed to be coiled at a take up reel 209 to get a roll of pre-cut film 111, especially as shown with figure 5 and as described above.

**List of reference signs**

| | | | |
|---|---|---|---|
| 100 | Film | 118 | Outer side |
| 101 | First edge | 119 | Inner side |
| 102 | Second edge | 120 | Outer side |
| 103 | Cover liner | 121 | Inner side |
| 104 | Carrier liner | 122 | Outer side |
| 105 | Adhesive film | 123 | Roll |
| 106 | Pre-cut | 124 | axis |
| 107 | spacing | 200 | device |
| 108 | gap | 201 | Take-off reel |
| 109 | First guide spacer | 202 | Guide roller |
| 110 | Second guide spacer | 203 | Cutting means |
| 111 | Pre-cut film | 204 | Flatbed press |
| 112 | Guide spacer | 205 | Bottom mount |
| 113 | Middling film | 206 | Rotary press |
| 114 | Film scrap | 207 | Bottom mount |
| 115 | First adhesive surface | 208 | Take-up reel |
| 116 | Second adhesive surface | 209 | Take-up reel |
| 117 | Inner side | | |

## Claims

1. Pre-cut film (111) with a first edge (101) and second edge (102) on the opposite side with regard to the first edge (101) both extending in a longitudinal direction, comprising a carrier liner (104) extending in a lateral direction form the first edge (101) to the second edge (102) and a pre-cut (106) placed onto the carrier liner (104), wherein the pre-cut (106) comprises an adhesive film (105) and a cover liner (103), a first adhesive surface (115) facing the cover liner (103) and a second adhesive surface (116) facing the carrier liner (104), **characterized in that** at least one guide spacer (109, 110, 112) is placed on the carrier liner (104), wherein said guide spacer (109, 110, 112) comprises an adhesive film (105) and a cover liner (103), a first adhesive surface (115) facing the cover liner (103) and a second adhesive surface (116) facing the carrier liner (104) and wherein a gap (108) is intended between the pre-cut (106) and the inner side (117, 119, 121) of the guide spacer (109, 110, 112) and wherein the outer side (118, 120, 122) on the opposite side with regard to the inner side (117, 119, 121) of guide spacer (109, 110, 112) builds at least partly the first edge (101) or the second edge (102).

2. Pre-cut film (111) according to claim 1 **characterized in that** a plurality of pre-cuts (106) is provided on the carrier liner (104) neighbored to each other in the longitudinal direction, preferably spaced to each other with spacing (107).

3. Pre-cut film (111) according to claim 2 **characterized in that** the guide spacer (109, 110, 112) is provided as a continuous band extending in said longitudinal direction neighbored to said pre-cuts (106) and spaced to said pre-cuts (106) with said gap (118).

4. Pre-cut film (111) according to one of the preceding claims, **characterized in that** two guide spacers (109, 110) are used, one of the guide spacers (109, 110) on each side of the pre-cut film (111) and wherein a gap (108) is intended between the pre-cut (106) and the inner side (117, 119) of each guide spacer (109, 110) and wherein the outer side (118) of the first guide spacer (109) builds at least partly the first edge (101) and the outer side (120) of the second guide spacer (110) builds at least partly the second edge (102).

5. Pre-cut film (111) according to one of the preceding claims, **characterized in that** the first edge (101) and/or the second edge (102) provides a flat surface area provided by the side face of the carrier liner (104) and the outer side (118, 120, 122) of the guide spacer (109, 110, 112)

6. Pre-cut film (111) according to one of the preceding claims, **characterized in that** the first edge (101) and/or the second edge (102) provides a staged surface area provided by the side face of the carrier liner (104) and the outer side (118, 120, 122) of the guide spacer (109, 110, 112).

7. Pre-cut film (111) according to one of the preceding claims, **characterized in that** the cover liner (103) has a tackiness in the range of 0.8 N/20mm² to 2.0 N/20mm², more preferably in the range of 1.0 N/20mm² to 1.8 N/20mm², even more preferably in the range of 1.2 N/20mm², to 1.6 N/20mm².

8. Pre-cut film (111) according to one of the preceding claims, **characterized in that** the adhesion between the cover liner (103) and the adhesive film (105) is higher than the adhesion between the carrier liner (104) and the adhesive film (105) in the range of six to eight times.

9. Method for producing an pre-cut film (111) according to any of claims 1 to 8, comprising the steps:
• Providing a film (100) with a first edge (101) and second edge (102) both extending in a longitudinal direction, comprising a carrier liner (104), with a cover liner (103) and an adhesive film (105) between the carrier liner (104) and the cover liner (103) wherein the adhesive film (105) comprises a first adhesive surface (115) facing the cover liner (103) and a second adhesive surface (116) facing the carrier liner (104);
• Cutting the film (100) in a way that the cover liner (103) and the adhesive film (105) is cut through, but that the carrier liner (104) is at least partly uncut, wherein the cut line is designed in a way that an outline of the pre-cut (106) and at least one outline of a cutoff-part is cut into the film (100) and wherein a remaining part of the film (100) is left, which is distanced from the outline of the pre-cut (106) by the cutoff-part, to provide at least one of said guide spacers (109, 110, 112).
• Removing the cover liner and the adhesive film of the cutoff part to provide said gap (108).

10. Method according to claim 9 **characterized in that** the film (100) is provided continuously and that the cutting step is carried out continuously to provide a plurality of pre-cuts (106) neighbored to each other in the longitudinal direction, preferably spaced to each other with spacing (107), and wherein the pre-cut film (111) is winded onto a roll after removing the cover liner and the adhesive film of the cutoff part.

11. Method according to any of claims 9 or 10, **characterized in that** the film (100) is cut in a way that the carrier liner (104) is cut with a cutting depth in the range of 5% to 50% of the thickness of the carrier liner (104), more preferably in the range of 10% to 40% of the thickness of the carrier liner (104), even more preferably in the range of 15% to 25% of the thickness of the carrier liner (104).
